# EUROPEAN PATENT APPLICATION

(11) **EP 1 431 862 A2**
(43) Date of publication of application: **23.06.2004**
(21) Application number: 03293182.6
(22) Date of filing: 16.12.2003
(51) Int. Cl.: G06F 1/00

(54) **Uniform framework for security tokens**

(30) Priority: 18.12.2002 US 321624; 01.04.2003 US 402960
(71) Applicant: ACTIVCARD IRELAND LIMITED, Dublin 2 (IE)
(72) Inventor: Le Saint, Eric, Los Altos, CA 94024 (US)
(74) Representative: Colas, Jean-Pierre

(57) **Abstract**

This invention provides a security token architecture which supports modular security application installations without loss of existing data or requiring the reinstallation of existing applications served by the security application modules. The architecture is compliant with the international standard ISO/IEC 7816-4, "Information technology - Identification tokens - Integrated circuit(s) tokens with contacts - Part 4: Interindustry commands for interchange." An application is integrated into a security domain (50) which serves as a centralized security applications programming interface between one or more token service applications and a series of security application modules. The API provides a more uniform security application interface which improves overall interoperability of the modular security applications and simplifies security application development. The API provides a separate shareable interface (80) which facilitates changes in security applications without disruption of existing application dependencies and allows customization of security properties associated with the installed security applications.

## Description

### FIELD OF INVENTION

The present invention relates generally to a data processing system, method and computer program product and more specifically to a framework for implementing a uniform security token architecture.

### BACKGROUND

Application development for use in security tokens has until recently required highly customized programs designed to execute on a specific security token platform. Initially, little effort was exerted into providing cross platform or multi-application support as the token issuer controlled all aspects of development and deployment of the applications contained inside the security token. This situation changed somewhat when a newer generation of multi-application security tokens became available. This newer generation of security tokens provided greater flexibility by allowing high level programming languages such as Java™ or Visual Basic™ to be used in the development of security token applications. The use of high level programming languages greatly simplified the development of security token applications and provided a mechanism for cross platform support.

However, the implementation of multi-application security tokens which facilitated inclusion of third party applications was slow to gain acceptance due in part to the lack of standards in which to develop applications and security concerns of the token issuers. To address these and other deficiencies, a industry consortium was formed called GlobalPlatform. GlobalPlatform has since developed a number of standards including GlobalPlatform Card Specification, the latest of which version 2.1, published June 4, 2001.

GlobalPlatform Card Specification 2.1, supports multiple applications residing in a security token, includes a mechanism for sharing of resources in a secure manner and standardizes the mechanism by which applications are loaded and installed in the security token. To implement the specification, a centralized management arrangement is installed inside the security token. This centralized management arrangement is controlled by the security token issuer and provides complete control over all post issuance applications, whether related to the security token issuer or otherwise. GlobalPlatform includes the ability to delegate certain token management aspects from the token issuer to third party application providers for performing approved and pre-authorized token content changes such as loading, installing or deleting applications owned by the third party. This token issuer-centric approach is described in US Patents 6,005,942 and 6,233,683, assigned to Visa International, Inc., one of the founding members of GlobalPlatform.

While advantageous in many commercial deployments, GlobalPlatform's issuer-centric model does not fit deployments where an unaffiliated applications provider desires to configure and maintain security policies specific to its assigned security domain. In this type of deployment, the unaffiliated applications provider's security policies may be incompatible with the issuer-centric security policies required by GlobalPlatform.

Another limitation in the relevant art, particularly in the JavaCard ™ operating environment, is the lack of a standard in security service application design which impacts interoperability of applications and enforcement of security policies at the application level or security domain.

This is a significant limitation in the relevant art since token security services are intermingled with token application management making the security policies difficult to maintain, limits scalability of common code, is inefficient in terms of space utilization and could potentially degrade interoperability between applications due to inconsistent usage of available token resources.

Lastly, a final significant limitation in the relevant art is the difficulty in the addition or replacement of security service applications such as authentication and secure messaging applications. Token service applications establish dependencies with the token security service applications by way of shareable interface objects. These dependencies limit the ability to easily replace a token security service application since dependent token service applications would not be linked to the new security service applications without reinstalling both the token service applications and the new token security services applications. Furthermore, the replacement and reinstallation task becomes considerably more difficult after the security token has been issued due to the presence of subsequently stored security data which may become lost or corrupted.

### SUMMARY

This invention addresses the limitations described above and provides a security token architecture which supports modular security application installations without loss of existing data or requiring the reinstallation of existing applications served by the security service application modules, provides a consistent and uniform interface to critical security token services such as authentication and secure messaging, and provides application level administration and configuration of security policies, thus minimizing redundancies in source code and freeing critical storage space for other uses.

According to the invention there is provided a uniform security applications architecture for deployment in a security token comprising a plurality of security applications functionally coupled to a shareable interface; and a security domain control services application operatively coupled to a runtime operating environment and including said sharable interface, one or more security policies associated with each of said plurality of security applications and control means for controlling said plurality of security applications by enforcement of said one or more security policies.
According to the invention there is also provided a uniform security applications architecture for deployment in a security token comprising, a plurality of security applications functionally coupled to a security domain control services application through a shareable interface, one or more security policies readable by said security domain control services application and associated with each of said plurality of security applications, and said security domain control services application operatively coupled to a runtime operating environment and including control means for reading and controlling said plurality of security applications by enforcement of said one or more security policies.
According to the invention there is also provided a uniform security applications architecture for deployment in a security token comprising a security domain control services application functionally coupled to a plurality of security applications through a shareable interface, said security domain control services application including at least one registry and a predefined architecture associated with said shareable interface; said at least one registry including a plurality of security parameters associated with each of said plurality of security applications; and at least one of said plurality of security applications executable to manipulate said plurality of security parameters, wherein manipulation of said plurality of security parameters facilitates at least the addition, replacement or removal of any of said plurality of security applications without disruption of said predefined architecture.
According to the invention there is also provided a uniform security applications architecture for deployment in a security token comprising, a security domain control services application including control means for controlling at least one functional aspect of at least one security application, a set of security policies having a functional relationship to said at least one security application and readable by said security domain control services application, wherein said set of security policies are read by said control means for controlling said at least one functional aspect of said at least one security application.
According to the invention there is also provided a uniform security applications architecture for deployment in a security token comprising a security domain control services application including a sharable interface and install means (respectively uninstall means) for installing (respectively uninstalling) at least one security application, wherein said install means (respectively said uninstall means) includes means for performing an operation which functionally links (respectively unlinks) said at least one security application to (respectively from) said sharable interface.
According to the invention there is also provided a uniform security applications architecture for deployment in a security token comprising, a set of security policies readable by a security domain control services application, wherein said set of security policies includes prerequisite information associated with a token services application for performing a token service; said token services application having a functional relationship to said security domain control services application, said token services application including means for receiving a request for services, for sending a permissive request to perform said token service to said security domain control services application, for receiving a determinative response from said security domain control services application determinative for performance of said token service, and for performing a token service in accordance with at least a portion of said set of security policies; and said security domain control services application including means for receiving said permissive request sent from said token services application, for determining applicable security policies for said permissive request, for enforcing said set of security policies, and for returning said determinative response to said token services application.

According to the invention there is also provided a method for functionally installing a security application inside a security token comprising the steps of:
a. functionally receiving a security domain control services application downloadable,
b. receiving a security application downloadable,
c. registering said security application downloadable with said security domain control services application downloadable,
d. configuring one or more security policies for said security application downloadable, and
e. setting at one or more security states for said security application downloadable.

According to the invention there is also provided a method for initializing a security application functionally installed inside a security token comprising the steps of:
a. performing an authentication in accordance with one or more associated security control methods, and
b. setting an authentication state.

According to the invention there is also provided a method for using a security application functionally installed inside a security token comprising the steps of:
a. executing a security application,
b. verifying that said security application is enabled,
c. verifying that a functional control element of said security application is enabled,
d. retrieving one or more security policies associated with said security application, and
e. validating said one or more security policies.

The term "security token" as defined herein refers to hardware based security devices such as security tokens, integrated circuit tokens, subscriber identification modules (SIM), wireless identification modules (WIM), USB token dongles, identification tokens, secure application modules (SAM), hardware security modules (HSM), secure multi-media token (SMMC) and like devices.

The security token architecture is compliant with the international standard ISO/IEC 7816-4, "Information technology - Identification tokens - Integrated circuit(s) tokens with contacts - Part 4: Interindustry commands for interchange".

The term "security domain" refers to one or more logical or physical workspaces within a security token allocated to an application provider for installation and execution of applications whose security policies are internally configured, maintained and enforced within the application provider's workspace apart from other security policies already existing within the security token.

A security domain control services application extends from the runtime operating environment and provides a uniform security applications programming interface (API) between the token's runtime operating environment and a series of security application modules installed inside an associated security domain. The security domain control services application is designed to provide and implement security domain level security policies rather than relying on issuer or administrative level security policies.

An object-oriented framework is envisioned for post issuance installations and backward compatibility using Java ™ for implementation in Java Cards ™ as described in "Java Card ™ 2.2 Application Programming Interface". In another embodiment of the invention, the security domain control services application is written in the native code language of the token processor and installed by the token manufacturer. Other embodiments adaptable to virtual machine tokens employing Windows for Smart Cards ™ are also envisioned by the inventor.

The security domain control services application includes a set of access control rules, a set of unlock control rules, a set of lock control rules, an accounting data and one or more registries. The registry (s) store the application identifiers (AID) for each installed security applications module and the current state of security requirements associated with the particular security domain. Optional parameters may be stored in the registry which provide a summary of security services available from security modules installed in the security domain, usage criteria, roles, activated components and administrative information. Single or multiple registries are envisioned which allows for future space and access optimization. The security domain control services application communicates with compliant applications through interface modules which are customized to support the specific functions of the installed security domain applications.

Each interface module includes a collection of routines and library functions used to communicate with the security domain control services application which are specific to the function of its associated application. Communications between the security domain control services application and security applications may include cryptographic methods to further preclude unauthorized monitoring of transactions. In the preferred embodiment of the invention, the interface modules are incorporated or linked to the security applications at time of installation into the security token.

The three basic categories of security applications include token services, token security administrative services and token security services and are discussed below.

Token services applications are applications which require some form of security measures in the form of secure messaging and/or authentication before performing a requested transaction. The token services applications are the actual clients served by the security domain control services application. An example of a token service application is an electronic wallet which requires user authentication in the form of a personal identification number (PIN) before access is allowed to the electronic funds stored inside the wallet. Other common examples of token service applications include use of cryptographic keys, secure storage of information and management of loyalty credits. Multiple instances of token services applications may be present in a particular security domain.

Each token service application includes pre-established commands and references to their associated access control rules which are maintained and enforced by the security domain control services application. The pre-established commands may include data to be transferred to the security domain control services application or minimized to include only applicable instructions steps in a command header.

These references are used by the security domain control services application to determine the security prerequisites necessary for the token service application to successfully perform a transaction. To provide backward compatibility with existing applications, actual access control rules may be included with the token service applications as well. The access control rules may be associated with the interface module or linked directly to each token service application.

Alternately, a security application identifier may be returned from the security domain control services application to a requesting service application as part of the security policy enforcement. In this embodiment of the invention, the requesting security application calls the security application directly using the returned application identifier.

The access control rules define the required security policies which must be satisfied before a token service application is used in processing a security function. For example, expanding on the electronic wallet described above, a set of access control rules may require a PIN or a biometric authentication before access to funds contained in the electronic wallet is permitted. In the preferred embodiment of the invention, the calling token service application sends a reference corresponding to the appropriate access control rules to the security domain control services application to determine the security states required by the requesting service application. The access control rules include logical AND, OR or NULL (none.)

Token security administrative services applications provide access to the parameters associated with the registries(s), access control rules, unlock control rules and accounting data for definition, configuration and management of security policies prescribed for the particular security domain. As such, each application provider may access and manage their own security policies but are prohibited from accessing or altering the security policies, parameters and rules of other entities installed in other security domains. In the preferred embodiment of the invention, the token security administrative services applications are separate applications modules. However, it is also envisioned by the inventor that the functionality of the token security administrative services applications may be incorporated into the security domain control services application as well to save critical storage space and improve execution speed. It is further envisioned that one or two token security administrative services applications may be installed in each security domain.
The token security services applications perform application level authentications, verify required authorizations and establish and maintain secure messaging sessions. The token security services applications establish the prerequisite security states required by the token services applications in accordance with an associated set of access control rules. The end results of executing one or more of the token security services applications are recorded in the registry (s) which are used to enforce the predefined application level security policies. Examples of token security services applications include authentication using personal identification numbers (PIN), authentication using biometrics, secure messaging using IPsec, SSL, TLS, WAP, etc. In the preferred embodiment of the invention, limited PIN and biometric unlock features are available through the token security services applications to minimize external support requirements. It is envisioned that multiple instances of token security services applications will be installed in a given security domain to accomplish traditional and emerging authentication technologies.

All of the security applications (token services, token security administrative services and token security services) are directly addressable by external resources using one or more of the following addressing formats;
APDU, INS, Object Identifier
APDU, INS, AID
Method Identifier, Object Identifier,
where APDU is an application protocol data unit, INS is an instruction byte, AID is an application identifier and the method identifier and object identifier are implicit references for implementation using Java Card ™ 2.2 remote method invocation (RMI) services.

Each security application is designed to update its associated security state in the registry (s) following execution of a security command. The modular nature of the security applications allows expansion of a base set of modular security applications without having to reconstruct dependencies.

The token's runtime operating environment provides error trapping, recovery and message routing functions between the various applications and external resources. Each security application is registered with the token's runtime operating environment and is addressable using its unique application identifier (AID) by the runtime operating environment. The invention may coexist with other API level applications including components associated with the aforementioned GlobalPlatform specification.

### BRIEF DESCRIPTION OF DRAWINGS

The features and advantages of the invention will become apparent from the following detailed description when considered in conjunction with the accompanying drawings. Where possible, the same reference numerals and characters are used to denote like features, elements, components or portions of the invention. It is intended that changes and modifications can be made to the described embodiment without departing from the true scope and spirit of the subject invention as defined in the claims.
FIG. IPA - is a generalized prior art diagram illustrating a shareable interface establishing dependencies between security service applications and service applications.
FIG. 1 - is a detailed block diagram illustrating the major components included in the invention where the shareable interface is centralized in a separate applications programming interface.
FIG. 1A - is a generalized block diagram illustrating the multiple instances of the security applications included in a plurality of security domains installed inside a single security token.
FIG. 1B - is a generalized block diagram illustrating an alternate embodiment of the invention where certain functionalities of the security applications are incorporated into a security domain control application.
FIG. 2 - is a detailed block diagram illustrating the functional relationship between a security domain control application, a plurality of security applications and associated security policies.
FIG. 2A - is a detailed block diagram illustrating the security applications and references to associated security policies maintained and enforced by the security domain control application.

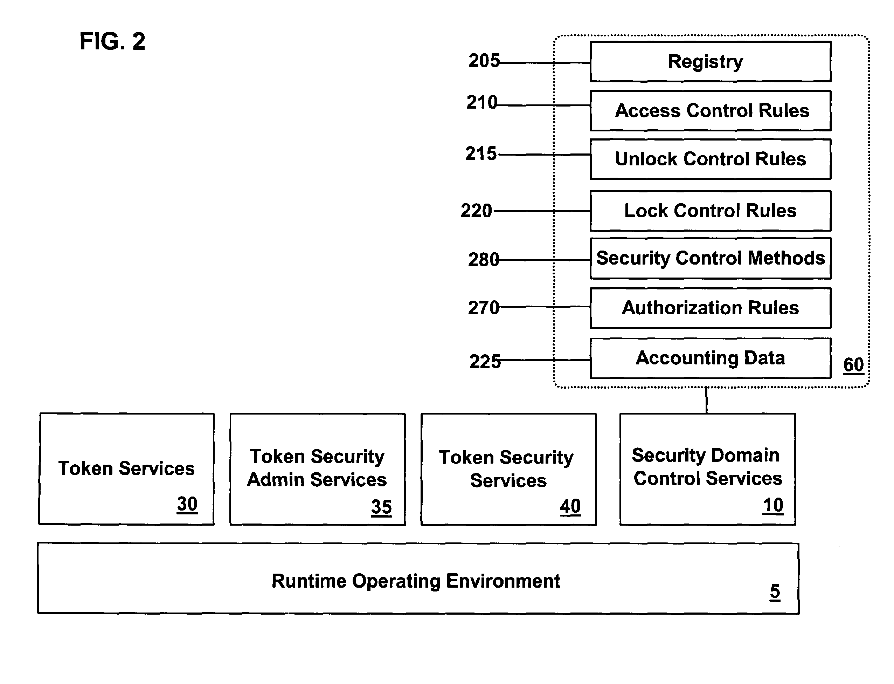

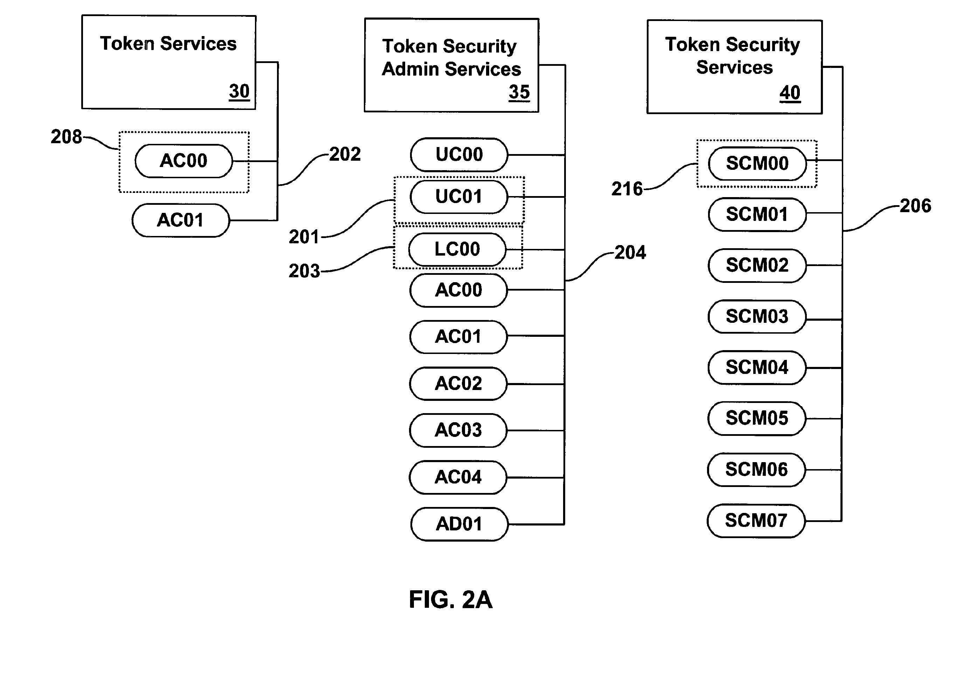

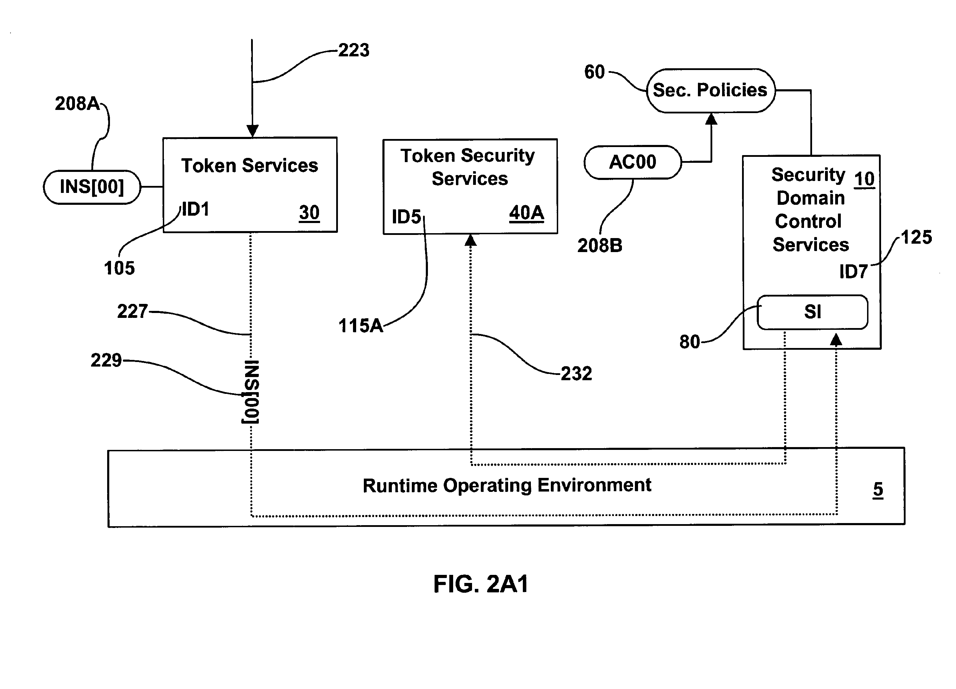

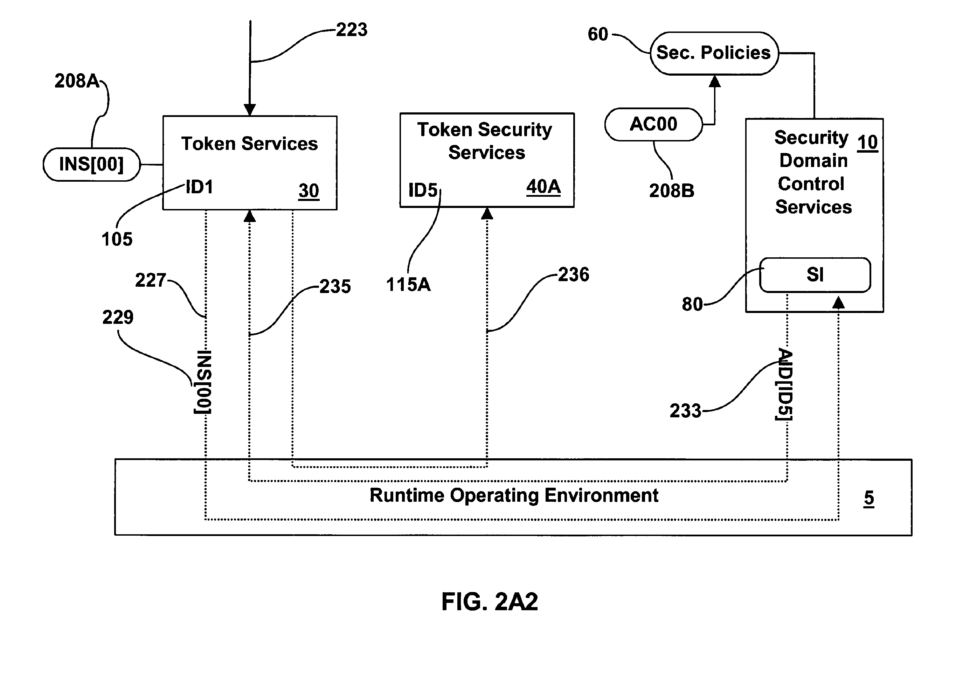

FIG. 2A1 - is a detailed block diagram illustrating an alternate embodiment of the invention where only a APDU command header including an instruction step is sent to the security domain control application.
FIG. 2A2 - is a detailed block diagram illustrating a variation of the alternate embodiment of the invention where only a APDU command header including an instruction step is sent to the security domain control application and an address of token security services application is returned for addressing directly by a token services application..

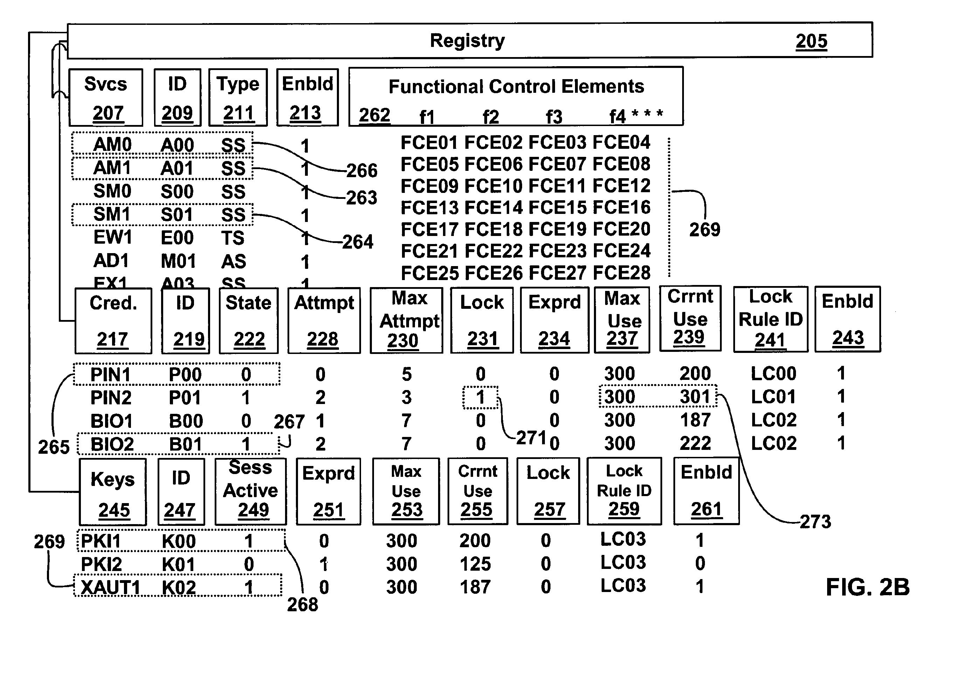

FIG. 2B - is a detailed block diagram illustrating a plurality of security parameters included in one or more registries associated with the security domain control application.

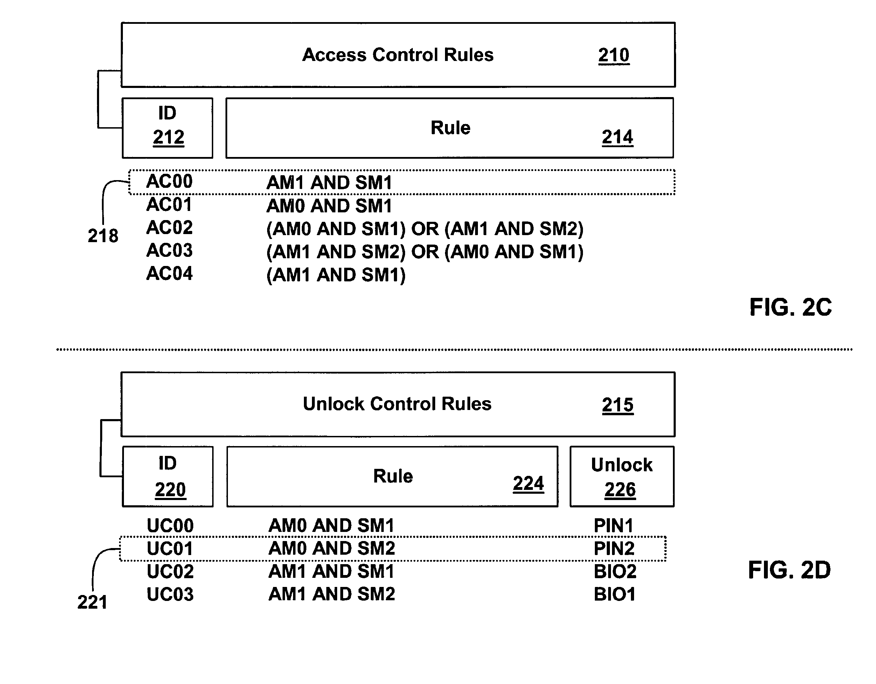

FIG. 2C - is a detailed block diagram illustrating a set of access control rules which are referenced by the security applications for enforcement of the token's predefined security policies.
FIG. 2D - is a detailed block diagram illustrating a set of unlock control rules which are referenced by certain of the security applications for unlocking of an authentication credential or cryptographic key.

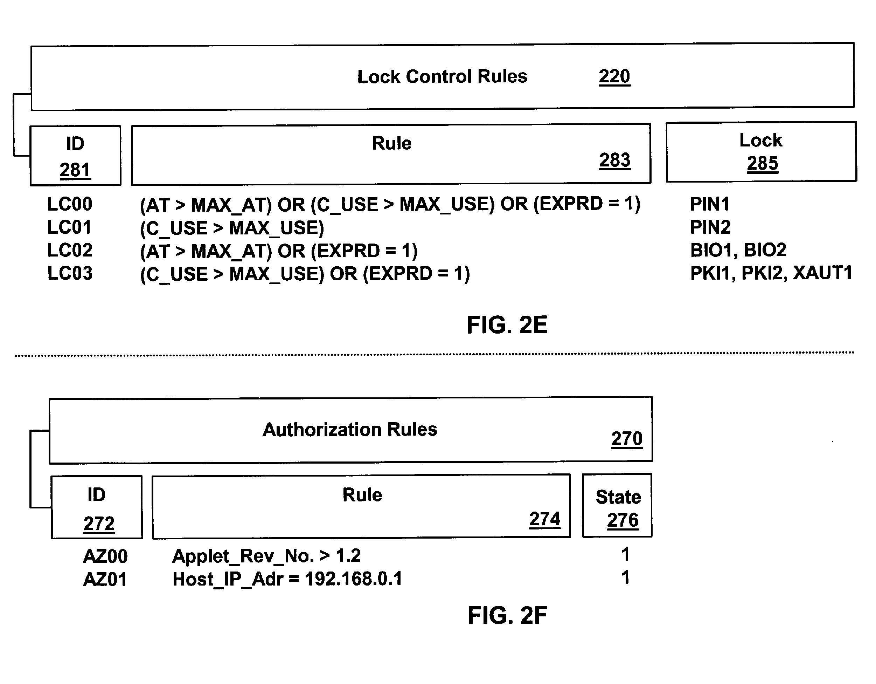

FIG. 2E - is a detailed block diagram illustrating a set of lock control rules which are referenced by certain of the security applications for locking of an authentication credential or cryptographic key.
FIG. 2F - is a detailed block diagram illustrating an accounting data including various administrative parameters available for future review using an administrative services application.

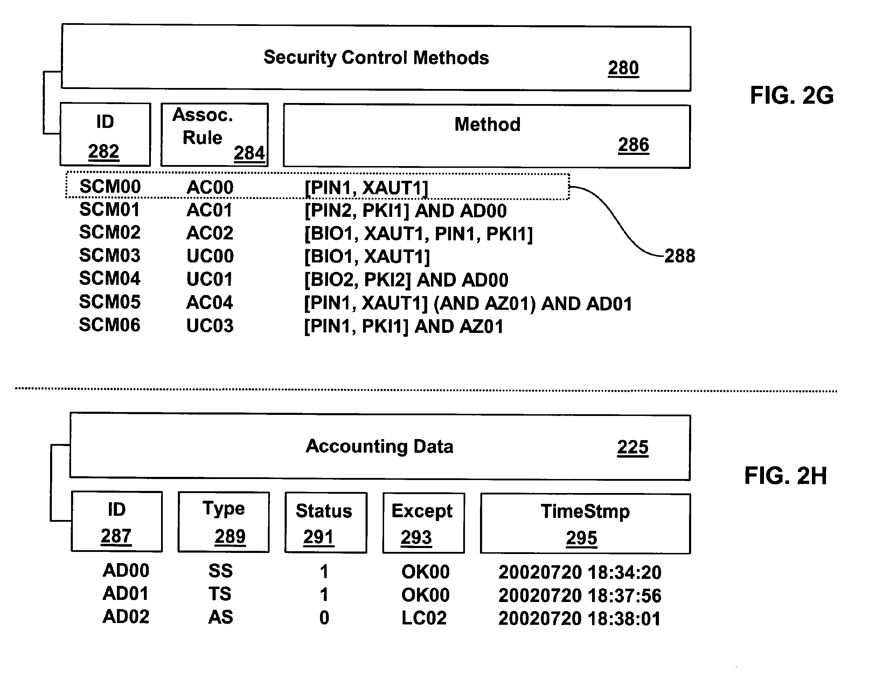

FIG. 2G - is a detailed block diagram illustrating a set of security control methods utilized by the token security services applications to implement a particular security policy.
FIG. 2H - is a detailed block diagram illustrating a set of accounting data provided for performing auditing of transactions and other administrative functions.

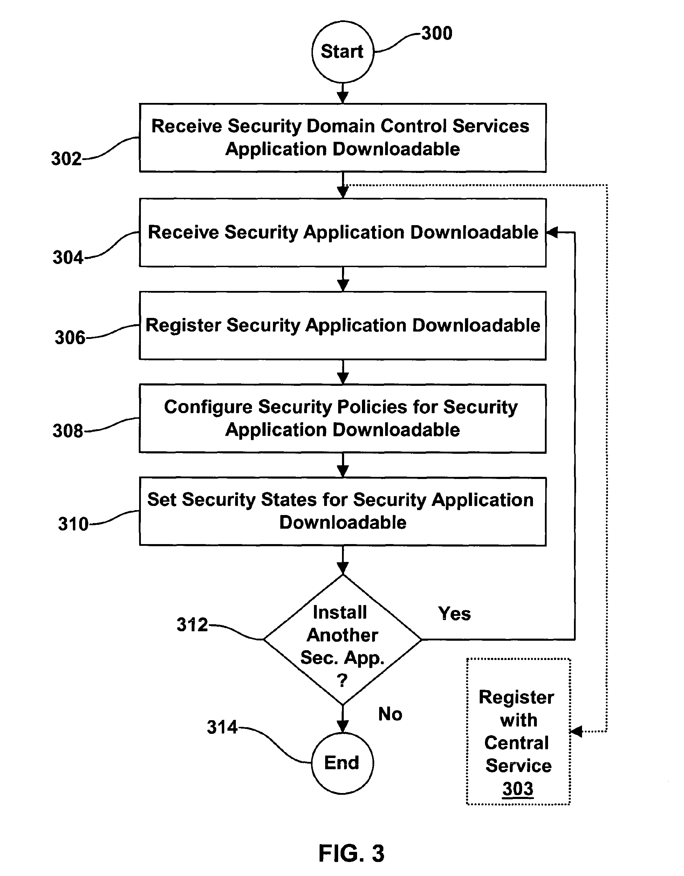

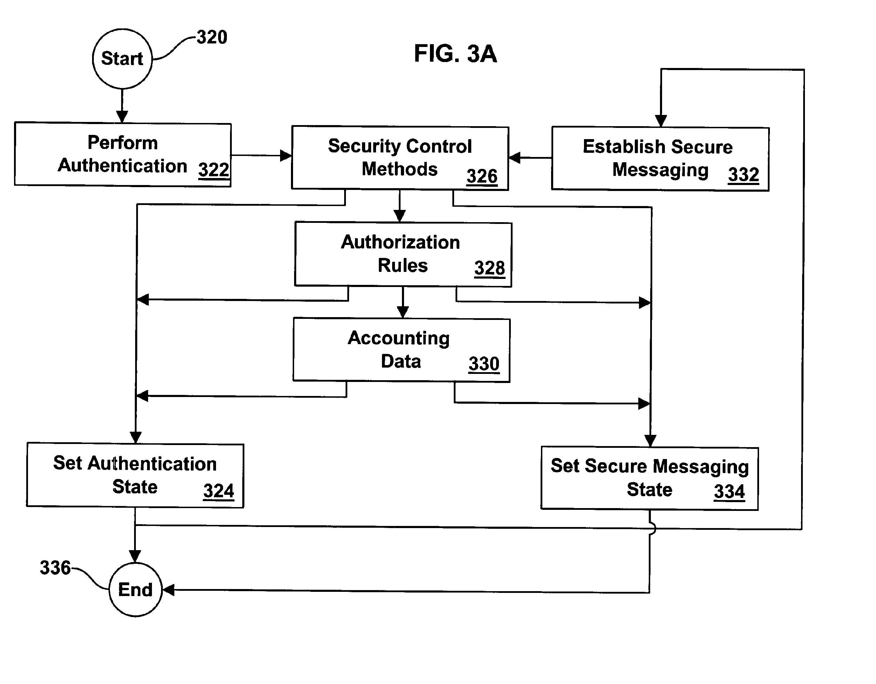

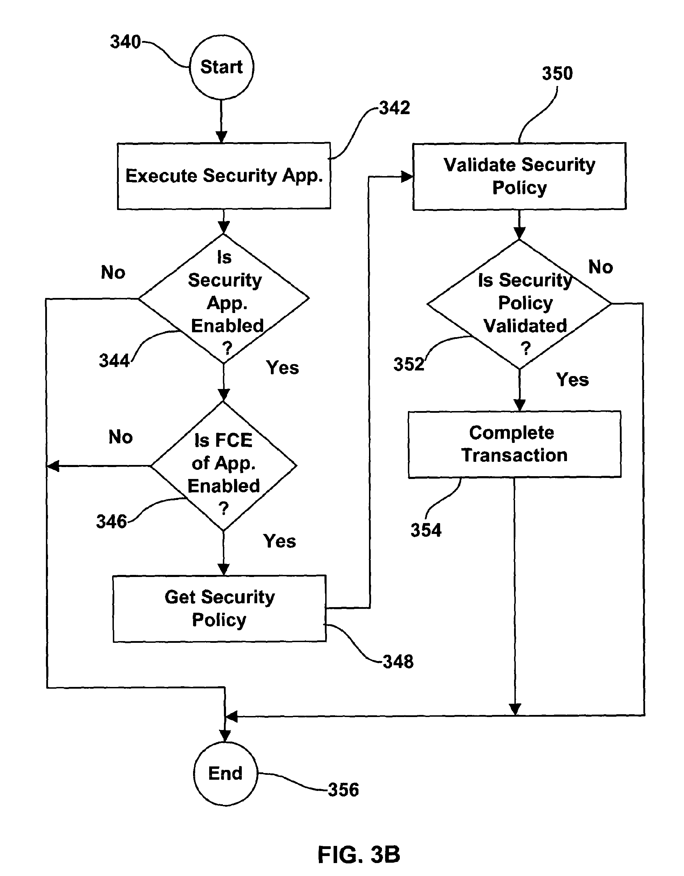

FIG. 3 - is a flow diagram illustrating the steps necessary to install an application into a security token using the invention.
FIG. 3A - is a flow diagram illustrating the steps necessary to set prerequisite states for using a token services application.
FIG. 3B - is a flow diagram illustrating the steps necessary to use a token services application.

### DETAILED DESCRIPTION

This present invention provides an application level security token architecture which supports modular security application installations without loss of existing data or requiring the reinstallation of existing applications served by the security application modules.

The invention has the added features of providing a more uniform security application programming interface which improves overall interoperability of security applications, simplifies security application development and provides application level management and enforcement of security policies.

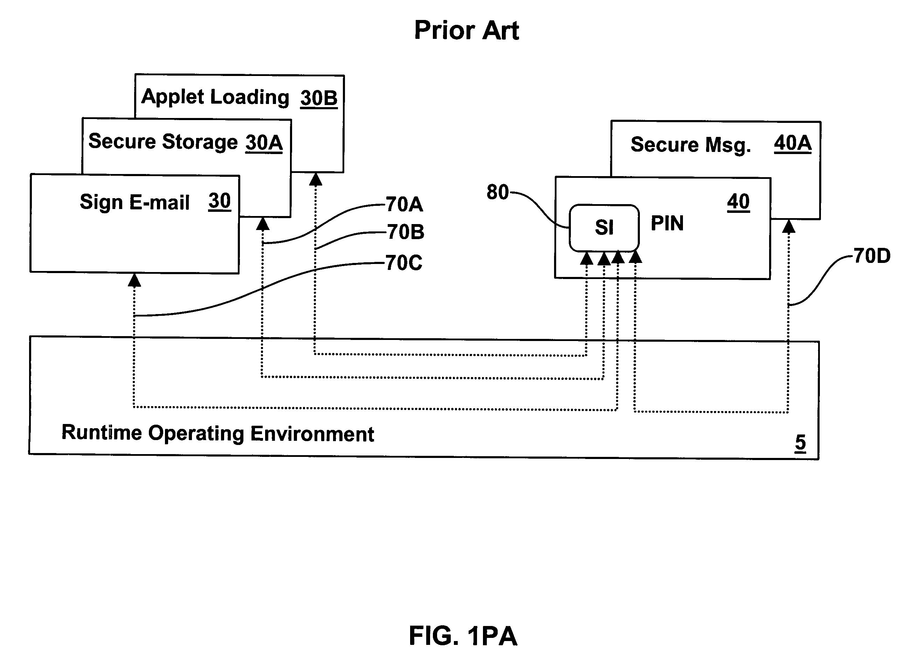

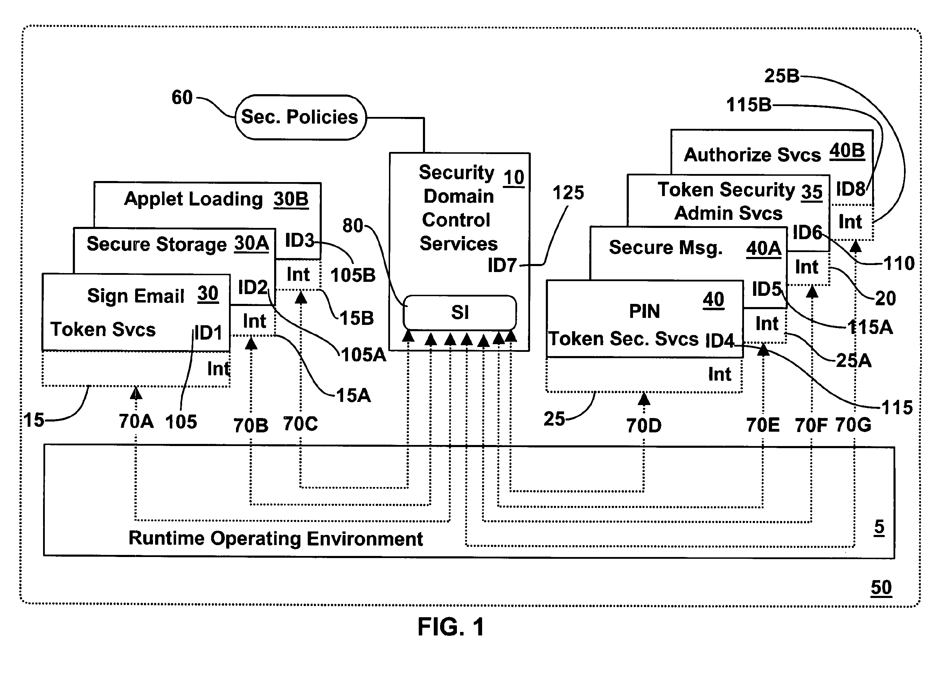

FIG.1PA depicts the prior art where a shareable interface 80 is incorporated into a security service application 40. In the prior art, messaging between the security service applications 40, 40A and the dependent token service applications 30, 30A, 30b is accomplished by the runtime operating environment 5 which routes messages and data between the applications using the designated shareable interface 80 in essentially a client/server relationship. The dependencies 70A,70B,70C,70D are shown as dashed lines. In this simplified example, if the PIN security service application 40 is removed, the shareable interface 80 and client dependencies 70A,70B,70C,70D would be lost, including access to any data associated with the token service applications 30,30A,30B. Also, the security services applications 40,40A may be owned and administered by the security token issuer, which would allow access and configuration of security policies not necessarily compatible with those of the token service applications 30,30A,30B provider. While only one sharable interface is shown, one skilled in the art will appreciate that multiple sharable interfaces may exist having a multiplicity of relationships.

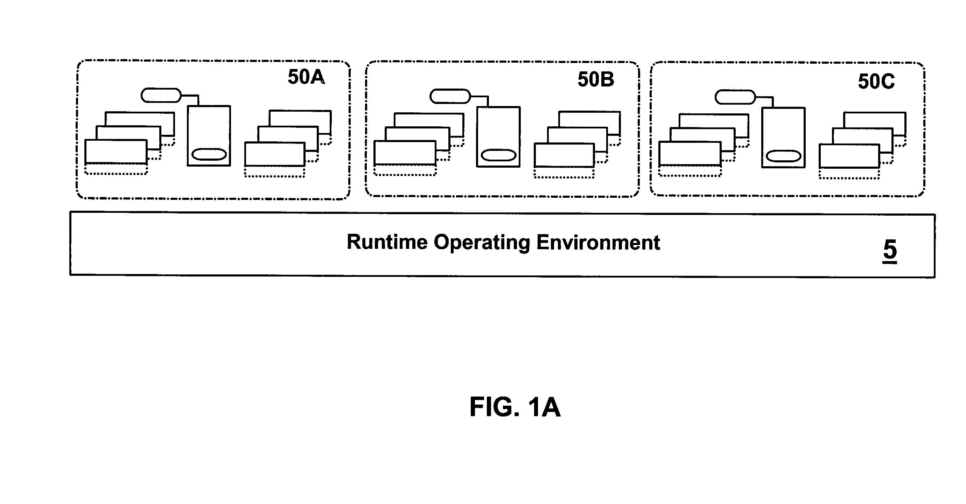

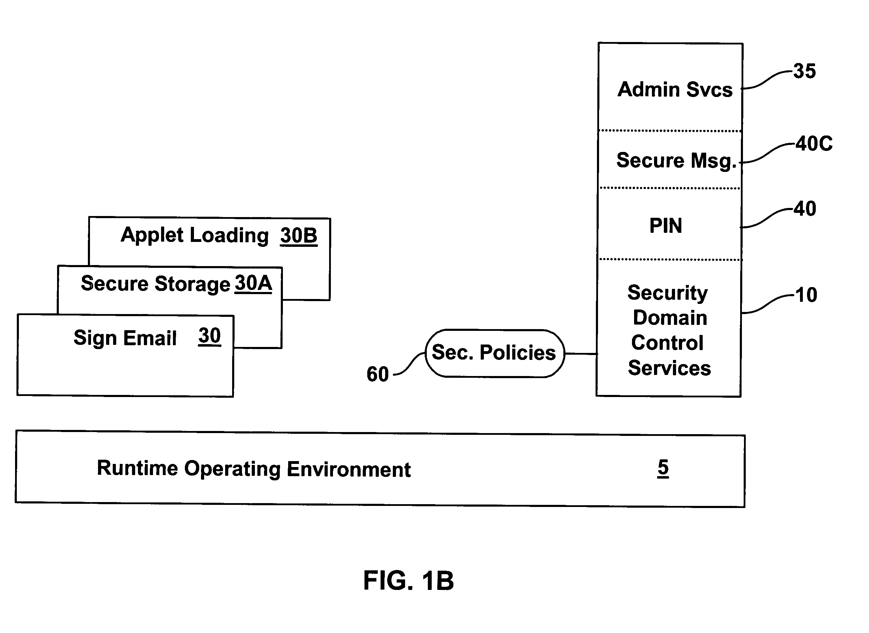

FIG.1 depicts one embodiment of the invention's architecture where the shareable interface 80 is incorporated into a security domain control services application 10. By relocating the shareable interface 80 to the security domain control services application 10, the token security administrative services application 35, the security services applications 40,40A,40B and token services applications 30,30A,30B become independent of each other, facilitating removal, replacement and/or addition of all three kinds of security applications without disruption of the existing interface dependencies 70A, 70B, 70C, 70D, 70E, 70F,70G.

The invention's architecture allows configuration and enforcement of security policies 60 specific to each application 30,30A,30B,35,40,40A,40B and is manageable by the owner of the security domain 50. Each token security application is externally addressable using a unique application identifier (AID) shown as ID1 105, ID2 105A, ID3 105B, ID4 115, ID5 115A, ID6 110, ID7 125 and ID 8 115B .

The runtime operating environment 5 is shown as a layer below the token security applications. The three basic types of token security applications include a token services application 30, a token security administrative services application 35 and a token security services application 40. Addressing the security applications may be accomplished explicitly using traditional APDU messaging or implicitly by remote method invocation (RMI) both of which are supported by the JCRE version 2.2, described in "Java Card ™ 2.2 Runtime Environment (JCRE) Specification".

In addition, each token security application includes pre-established references incorporated into either or both application protocol data units (APDUs) or invokeable using remote method invocation (RMI). The references refer to the security policies 60 maintained and enforced by the security domain control services application 10. The references are used by the security domain control services application 10 to determine the security prerequisites necessary for the token security application(s) to successfully perform a transaction. When using remote method invocation, the APDUs include remote object identifiers, method identifiers and includes any parameters to be passed to the receiving security application. A more detailed discussion of the pre-established commands and implementation of the security policies is provided in the discussion for Figs. 2A - 2G.

The token services application(s) 30 are applications which generally require implementation of some type of security policy(ies) 60 before performing a requested transaction. This type of application is envisioned to be the most common type of application installed inside the security domain 50. Examples of token service applications include electronic wallets, credential verification applications, secure storage of personal information and management of loyalty credits.

The token security administrative services application 35 allows creation and maintenance of security policies, parameters, logic based rules, transaction accounting, registration and deregistration of installed applications and other administrative parameters included in the security domain control services application 10. This type of application is the least common type of application installed in the security domain 50 and provides specific authenticated access to the security policies, parameters, rules and administrative information associated with each compliant security application installed in the security domain 50.

As such, each application provider may access and manage their own applications but are prohibited from accessing or altering the security policies, parameters and rules of other entities installed inside other security domains present in the security token.

The token security administrative services application 35 is shown as a separate application, however, it is also envisioned by the inventor that the functionality of the administrative services application 35 may be incorporated into the security domain control services application 10 to conserve critical storage space and improve execution speed.

The token security services application(s) 40 perform authentication, secure messaging 40A and authorization functions 40B. This type of application is anticipated to be the second most common type of program installed in the security domain 50. The token security services application(s) establish the prerequisite security state(s) required by the token service application(s) 30 and set using the token security administrative services application 35. The end result(s) of executing one or more of the token security services applications 40 are recorded in a registry and enforced by the security domain control services application 10 as prescribed by the security policies 60.

Examples of token security services applications include entity authentication using personal identification numbers (PIN), authentication using biometrics, secure messaging using IPsec, SSH, SSL, TLS, WAP, etc., and validating internal and external criteria against at least one set of rules. In the preferred embodiment of the invention, limited PIN and biometric unlock features are available through the token security services applications to minimize external support or "help desk" requirements.

Each of the client security applications 30, 30A, 30B, 35, 40, 40A, 40B may be associated with an interface 15, 15A, 15B, 20, 25, 25A, 25B. The interfaces, shown in dotted lines, provide a collection of routines and library functions that are used by the client security applications to communicate with the server security domain control services application 10. In the preferred embodiment of the invention, the interfaces 15, 15A, 15B, 20, 25, 25A, 25B are incorporated or linked to the security applications 30,30A,30B,35,40,40A,40B when loaded into the security token. For backward compatibility the interfaces may be installed as separate modules.

Each of the security applications 30, 30A, 30B, 35, 40, 40A, 40B will utilize a copy or instance of the interface module specific to the type of security application, to communicate with the security domain control services application 10. The type of interface controls access to various entry points and services available in either the security domain control services application 10 or runtime operating environment.

The security domain control services application 10 provides a uniform security applications programming interface (API) between the token's runtime operating environment and the security applications 10, 30, 30A, 30B, 35, 40, 40A, 40B installed within the security domain 50. The security domain control services application 10 is designed to provide and enforce application level security policies 60 rather than relying on "generic" security policies established by the security token issuer.

An object-oriented framework for the security domain control services application 10 is envisioned for post issuance installations and backward compatibility using Java Cards ™. In another embodiment of the invention, the security domain control services application 10 is written in the native code language of the token processor and installed by the token manufacturer. The invention is intended to coexist with other API level applications including components associated with the GlobalPlatform specification. GlobalPlatform is not required for implementation of this invention.
In FIG. 1A, a typical embodiment of the invention is depicted where several security domains 50A, 50B, 50C are installed inside a security token. Each security domain may register itself with another security domain to allow interoperability between security applications in separate security domains.

In reference to FIG. 1B, an alternate embodiment of the invention is shown where prerequisite security applications are incorporated into the security domain control services application 10. This embodiment of the invention takes into account that a token security administrative services application 35, a token security services application 40 related to user PIN authentication and at least one token security services application 40C related to secure messaging will always be required as a prerequisite to the successful execution of one or more of the token services applications 30, 30A, 30B. The integration of the two security applications into the security domain control services application 10 does not materially change the functionality of the invention but may provide limited memory storage savings and improved execution speed.

Referring to FIG. 2, the security domain control services application 10 is associated with the security policies 60 to be enforced. The security policies 60 are comprised of a registry 205, access control rules 210, unlock control rules 215, lock control rules 220, security control methods 280, authorization rules 270 and accounting data 225. The registry 205 includes a plurality of security parameters related to the installed security applications 30,35,40. Single or multiple registries 205 are envisioned which allows for future development and optimization. The access control rules 210 includes the security requirements related to authentication and secure messaging to be enforced by the security domain control services application 10.

The unlock control rules 215 include the security policies to be enforced by the security domain control services application 10 for unlocking of a credential or a cryptographic key. The lock control rules 220 include the security policies to be enforced by the security domain control services application 10 to prevent use of a credential or a cryptographic key. The security control methods 280 provides a mechanism where parameters required to accomplish a certain task such as authentication or secure messaging are maintained and associated with a particular access or unlock control rule. The security control methods 280 also allow incorporation of authorization rules 270 into the overall security policies. The authorization rules 270 are provided as a way to extend the security policies to other parameters or states not normally maintained as part of the registry.

The accounting data 225 includes administrative parameters and information accessible by the token security administrative services application 35 for use in configuring and managing the security policies associated with the particular security domain 50.

It will be appreciated by one skilled in the art that the types of parameters, data structures and functional relationships with other parameters may be varied to accomplish a particular security policy. The parameters, structures and functional relationships shown in the drawings are intended as examples only. No limitation of the invention should be construed from these examples.

In FIG. 2A, example pre-established references to sets of predefined security policies are shown. For simplicity and ease in understanding of the invention, actual APDU formats and/or java method and object identifiers are excluded. The codes contained in the ovals associated with the token services application 30 and token security administrative services application 35 refers to the logic based rules shown in FIG. 2C, 2D and 2E, while the codes included in ovals associated with the token security services application 40 refers to the authorization rules and security control methods shown in FIGs. 2F and G.

For example, the token services application 30 is shown associated with two pre-established references 202 representing access control rules. In practice, there may be several pre-established references to perform different functions available to a particular application as specified by the code included in the ovals. The references 202 may be linked directly to the token services application 30 or incorporated into the interface module 15 shown in FIG.1. For backward compatibility purposes, actual access control rules rather than references may be included in either the token services application 30 or interface 15.

The references 204 associated with the token security administrative services application 35 allows administrative tasks to be performed on the credential and cryptographic key unlock rules, access control rules, lock control rules and accounting data. In the preferred embodiment of the invention, the token security administrative services application 35 has full editing capability of the registries, credential and cryptographic key unlock rules, access control rules, lock control rules, security control methods, authorization rules and accounting data. The references 204 may be linked directly to the token security administrative services application 35 or incorporated into the interface module 20 shown in FIG.1. For backward compatibility purposes, actual access control rules rather than references may be included in either the token services application 35 or interface 20.

The references 206 associated with the token security services application are used to perform authentications, establish secure messaging, verify authorization states and allow limited credential unlocking capabilities. The references 206 to the security control methods shown in FIG.2G may be linked directly to the token security services application 40 or incorporated into the interface module 25 shown in FIG.1. For backward compatibility purposes, actual access control rules rather than references may be included in either the token services application 40 or interface 25. The references 202, 204 and 206 may exist in a traditional APDU command format or in the remote object and method identifier formats required for use with remote method invocation services.

Referring to FIG. 2A1 an alternate embodiment of the invention is shown where the token services application 30 transfers a minimal APDU which includes only the mandatory header information of class (CLS), instruction step INS and parameter bytes (P1, P2). This arrangement simplifies interfacing requirements and improves communications efficiencies between the security applications. In this embodiment of the invention, a request for service 223 causes the token services application to send 227 an APDU comprised essentially of an instruction step INS[00] 208A to the security domain control services application 10. The security domain control services application 10 determines the applicable security policies 208B to enforce based on the received instruction step INS[00] 208A. The determined security policies are then enforced 232 on the token security services application 40A.

Referring to FIG. 2A2 a variation of the inventive embodiment described for FIG. 2A1 is shown. In this embodiment of the invention, a request for service 223 causes the token services application to send 227 an APDU comprised essentially of an instruction step INS[00] 208A to the security domain control services application 10 as before. However, in this embodiment of the invention, the security domain control services application 10 determines the applicable security policies 60 and returns 235 to the token services application 30 an APDU which includes the address AID[ID5] 233 of the token security services application 40A specified by the applicable security policies 60. The token services application 30 then addresses 236 the token security services application 40A directly as part of the security policy enforcement.

Referring to FIG. 2B, an example registry 205 is depicted and includes a number of separate parameters. The registry 205 is maintained by the security domain control services application. The first set of parameters included in the registry relates to available token services 207. For example, authentication (AM0, AM1), secure messaging (SMO, SM1), electronic wallet (EW1) administrative services (AD1) and external information (EX). Each separate entry being indicative of a separately available application operatively installed in the associated security domain.

Associated with each installed application is a unique application identifier ID 209, which is used to address the specific application. Optional, but highly desirable parameters include a retrievable list of available service types Type 211 for example, token security services such as authentication and secure messaging are denoted by SS, token services applications such as an electronic wallet is denoted by TS and token administrative services such as auditing is denoted as AS. The enablement status of each registered application is provided 213. The ability to enable or disable a registered application is performed using the token administrative services application to change the status flag 213 included in this portion of the registry 205. If the registered application is not enabled 213, the application will not be allowed to operate.

Lastly, it is envisioned that one or more multifunction applications may be installed. In order to control each portion of the multifunction application, a set of functional control elements 262 is provided. The functional control elements include instruction codes 269 which are interpreted when the selected application is executed. The number of functional control elements shown are for example only.

The actual number of functional control elements may vary depending on the applications installed. In a traditional embodiment of the invention, the functional elements utilize standard instruction bytes or when using remote invocation services, the functional control elements utilize remote method and object identifiers.

A second set of parameters included in the registry relates to credential management. Each available credential 217 is included in this portion of the registry and associated with a unique identifier ID 219. The current authentication state 222 for each credential is recorded in the registry 205. The current credential authentication state 222 is verified by the security domain control services application in accordance with the predefined security policies. For example, an electronic wallet may require user authentication by a PIN entry before access to electronic funds is permitted. If the proper PIN state 222 is not present, the user will be prevented from accessing the electronic funds.

The optional, but highly desirable parameters associated with the second set of parameters include tracking of the number of failed access attempts 228 associated with a particular credential, maximum number of attempts 230, locked 231 status flags for credentials where an excessive number of failed access attempts has occurred, expiration date or expired status flag 234, maximum number of uses of a credential 237 before the credential becomes locked 231, the number of current or remaining uses of a credential 239, the associated lock rules identifier 241 and the administrative status of each installed application is provided 243. The ability to enable or disable an installed credential is performed using the token administrative services application to change the status flag included in this portion 243 of the registry. Activation or deactivation of a credential is accomplished by changing the status of the credential flag in this portion 243 of the registry.

A third set of parameters included in the registry 205 relates to cryptographic key management. Each available cryptographic key 245 included in this portion of the registry 205 is associated with a unique identifier ID 247. Session flag 249 is available to determine if an active session has been established.

Optional, but highly desirable parameters associated with the third set of parameters include expiration date or expired status flag 251, maximum number of uses of a cryptographic key before the key becomes locked 253, the number of current or remaining uses for a cryptographic key 255, locked 257 status flag and its associated lock rule identifier 259, and the ability to administratively enable or disable each installed cryptographic key using the token administrative services application to change the enabled 261 status flag included in this portion of the registry. Activation or deactivation of a cryptographic is accomplished by changing the status of the credential in this portion 261 of the registry.

Referring to FIG. 2C, an example set of access control rules 210 is provided. Each access control rule 214 is associated with a unique identifier 212. The access control rules 214 specifies which token security service applications must have completed processing successfully including updating of their associated entries in the registry 205 before a token services application may successfully complete processing.

The unique identifier 212 has a functional relationship to a particular security control method 280 shown in FIG. 2G, and is processed by the security domain control services application. The security domain control services application verifies that all prescribed required states and parameters are satisfied. If one or more required states or parameters differ from the particular access control rule 214 requirements, the requesting security application receives a negative response from the security domain control services application and the transaction ends. If the security requirements are verified processing continues. The access control rules 210 include the logical operators AND, OR or NULL (none). Other Boolean or logic based rules are envisioned as well. The access control rules are combinable with other security rules or security parameters. Administration of the access control rules 210 and related parameters is accomplished using the token security administrative services application.

The operation of the access control rules 210 is shown by way of example. Referring to FIG. 2A, if the token services application 30 is executed with the security policy requirements specifying access control rule AC00 208, the security domain control services application would interpret the access control rule AC00 218 as shown below;

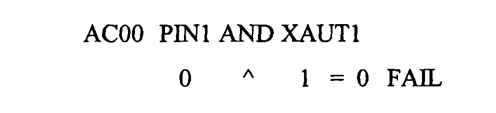

Referring again to FIG. 2B, the security domain control program would verify that the pre-requisite registry states controlled by authentication application AM1 263 in conjunction with PIN1 265 and secure messaging using secure messaging application SM1 264 in conjunction with cryptographic key XAUT1 269 are present in the registry.

Based on the result of this example, the security requirements have not been met and a negative response will be returned to the requesting application and processing terminated. The relationship between a token security services application and access control rules is more fully described in the accompanying discussion for FIG. 2F and G.

Referring to FIG. 2D, a first special case of access control rules referred to as unlock control rules 215 are provided for unlocking a credential or cryptographic key which has become disabled due to an excessive number of failed authentication attempts or possible compromise. Each unlock control rule 224 is associated with a unique identifier 220. The unique identifier 220 for a particular unlock control rule is referenced by either a token security services application or token administrative services application and processed by the security domain control services application analogously to the access control rules described above. The unlock control rules 215 likewise use logical operators such as AND, OR or NULL (none.) Other Boolean or logical based operators such as NOT, unions, etc. are also envisioned.

An optional set of parameters 226 are included which specifies the credential or cryptographic key associated with a particular unlock rule. The unlock control rules 224 shown are intended as examples only. Administration of the unlock control rules 224 is accomplished using the token administrative services application. The unlock control rules are likewise combinable with other security rules or security parameters.

The operation of the unlock control rules 215 is again shown by way of example. Referring to FIG. 2A, if the token administrative services application 35 is executed with the security policy requirements specifying unlock control rule UC01 201, the security domain control services application would interpret unlock control rule UC01 201 as shown below;

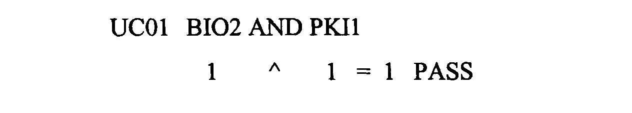

Referring back to FIG. 2B, the security domain control program would verify that the pre-requisite registry states controlled by authentication application AM0 266 in conjunction with BIO2 267 and secure messaging using secure messaging application SM1 264 in conjunction with cryptographic key PKI1 268 are present in the registry

Based on the result of this example, the security requirements have been met allowing the Lock status flag 231 associated with PIN2 271 to be unlocked. The relationship between a token security services application and access control rules is more fully described in the accompanying discussion for FIG. 2F and G.

Referring to FIG. 2E, a second special case of access control rules referred to as lock control rules 220 are provided for locking a credential or cryptographic key which should be disabled due to an excessive number of failed authentication attempts or possible compromise. Each lock control rule 283 is associated with a unique identifier 281. The unique identifier 281 for a particular lock control rule is referenced by either a token security services application or token security administrative services application and processed by the security domain control services application analogously to the access control rules described above.

An optional set of parameters 285 are provided which specifies the credential or cryptographic key associated with the particular lock rule. The lock control rules 225 include the logical operators AND, OR or NULL (none), GREATER THAN, LESS THAN, NOT EQUAL TO and EQUAL TO. Other Boolean or logic based rules are envisioned as well. Administration of the lock control rules 220 is accomplished using the token security administrative services application. The lock control rules are likewise combinable with other security rules or security parameters.

The operation of the lock control rules 220 is again shown by way of example. Referring to FIG. 2A, if the token administrative services application 35 is executed with the security policy requirements specifying unlock control rule LC01 203, the security domain control services application would interpret unlock control rule LC01 203 as shown below;

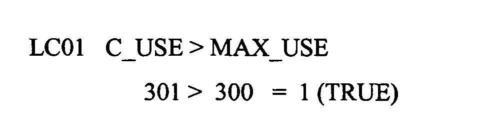

Referring back to FIG. 2B, the security domain control program would compare the Max Use 237 to the Current Use 239 parameters for PIN2 273 which would result in PIN2 becoming locked 271 due to excessive usage.

Referring to FIG. 2F, authorization rules 270 are provided which allows for additional the extension of the security policies to other parameters or states not normally maintained as part of the registry. Each authorization rule is associated with a unique identifier 272. The unique identifier 272 for a particular authorization rule is referenced by the security domain control services application during execution and may refer to either internal or external sources of information. For example, in order for a particular internal applet to be permitted to execute, a revision number greater than a base number may be required.

Alternately, another applet may be only be permitted to execute when an associated external host has a particular universal resource locator ID. The authorization rules 274 may utilize AND, OR or NULL (none), GREATER THAN, LESS THAN, NOT EQUAL TO and EQUAL TO. Other Boolean or logic based rules are envisioned as well. Administration of the authorization rules 270 is again accomplished using the token security administrative services application and are likewise combinable with other security rules. It will be appreciated by one skilled in the art that other internal and/or external criteria may be utilized for an authorization rule.

Referring to FIG. 2G, security control methods 280 are provided which are utilized by the token security services applications to implement a particular security policy. Each security control method is associated with a unique identifier 282. The unique identifier 282 for a particular security control methods is referenced by a token security services application in order to establish a pre-requisite security state. Each security control method is associated with a specific access control rule 284 and provides the methodology 286 and required parameters for the token security services applications to implement a security policy.

For example, referring back to FIG. 2A, a token security services application 40 is executed with the security policy requirements specifying security control method SCM00 216, the token security services application would implement the security control method SCM00 216 by executing access control rule AC00 218 shown in FIG. 2C. Referring now to FIG. 2B, access control rule AC00 218 requires authentication applet AM1 263 in conjunction with PIN1 265 and establishment of secure messaging using secure messaging applet SM1 264 in conjunction with cryptographic key XAUT1 269. The actual security control method SCM00 288 specifies the proper credentials to use in authentication transactions and proper cryptographic keys to use in secure messaging sessions. In addition, accounting policies and authorization rules may be added to a particular security control method.

Lastly, referring to FIG. 2H, accounting data 225 is provided for performing auditing of transactions and other administrative functions. Each entry in the accounting data 225 is associated with a unique identifier 287, an optional transaction type 289 such as security services (SS), token services (TS) or administrative services (AS) transactions, a failed or successful status entry 291, an exception 293 entry indicating which access control rule was violated, and a time stamp entry 295. Access to the accounting data 225 and selection of the parameters to be audited are configurable using the token security administrative services application. As with all the previous rules and parameters, administration of the security control methods 280 is accomplished using the token security administrative services application.

It will be appreciated by one skilled in the art that the specific parameters employed and their interrelationships with the access control rules, lock control rules, unlock control rules, security control rules and accounting data may be varied to accomplish a specific security arrangement or security policy without deviating from the spirit and intent of this invention.

In FIG. 3, a flow chart is shown which details the necessary steps for the installation of a security application. The process is initiated 300 by receiving a security domain control services downloadable. In a multiple security domain environment, the security domain control services downloadable is registered with a central security domain control services application 303 to allow interoperability between security domains. In either case, the following step requires that the security application downloadable be received 304 and registered 306 with the security domain control services downloadable. The next step is to configure the security policies 308 associated with the security application downloadable including access control rules, lock and unlock control rules, security control methods, associated credentials and cryptographic keys, etc. which are retained by the security domain control services downloadable.

The next step requires that the required security states be established for the security application downloadable 310. If one or more additional security application downloadables are to be installed, steps 304 - 310 are repeated. Otherwise, this ends the installation process 314.

Referring to FIG. 3A, once the security application downloadables are properly installed as described above, the use of the newly installed security applications are controlled by their associated security policies. To use the new security applications the process begins 320 by performing an authentication 322 in accordance with one or more security control methods 326. If one or more applicable authorization methods are required, then the authorization rules 328 are implemented. If accounting data is required, then the accounting data is collected 330. Upon completion of all required steps 326, 328, 330 the authentication state 324 is set in a registry. If the security policies do not require secure messaging, processing ends 336.

If the security policies do require secure messaging, a secure messaging session is established 332 in accordance with one or more security control methods 326. If one or more applicable authorization methods are required, then the authorization rules 328 are implemented. If accounting data is required, then the accounting data is collected 330. Upon completion of all required steps 326, 328, 330 the secure messaging state 334 is set in the registry followed by processing end 336.

Referring to FIG. 3B in order to use the security application, the process is initiated 340 by executing the security application 342 and verifying if the security application module is enabled 344. If the security application is not enabled 344 processing ends 356. Otherwise, processing continues by determining whether the portion (i.e., functional control element) of the security module is enabled 346. If the portion of the security application is not enabled 346, processing ends 356. Otherwise, processing continues by retrieving a security policy 348 and validating the applicable security policy. If security policy is not validated 352, processing ends 356. If the applicable security policy is validated 352, the security application completes the transaction 354 followed by normal end of processing 358.

The foregoing described embodiments of the invention are provided as illustrations and descriptions. They are not intended to limit the invention to precise form described. In particular, it is contemplated that functional implementation of the invention described herein may be implemented equivalently in hardware, software, firmware, and/or other available functional components or building locks. No specific limitation is intended to a particular security token operating environment. Other variations and embodiments are possible in light of above teachings, and it is not intended that this Detailed Description limit the scope of invention, but rather by the Claims following herein.

## Claims

1. A uniform security applications architecture for deployment in a security token comprising:
a plurality of security applications (30, 30A, 30B, 35, 40, 40A, 40B) functionally coupled to a shareable interface (80); and
a security domain control services application (10) operatively coupled to a runtime operating environment (5) and including said sharable interface (80), one or more security policies (60) associated with each of said plurality of security applications (30, 30A, 30B, 35, 40, 40A, 40B) and control means for controlling said plurality of security applications (30, 30A, 30B, 35, 40, 40A, 40B) by enforcement of said one or more security policies (60).

2. A uniform security applications architecture for deployment in a security token comprising:
a plurality of security applications (30, 30A, 30B, 35, 40, 40A, 40B) functionally coupled to a security domain control services application (10) through a shareable interface (80),
one or more security policies (60) readable by said security domain control services application (10) and associated with each of said plurality of security applications (30, 30A, 30B, 35, 40, 40A, 40B), and
said security domain control services application (10) operatively coupled to a runtime operating environment (5) and including control means for reading and controlling said plurality of security applications (30, 30A, 30B, 35, 40, 40A, 40B) by enforcement of said one or more security policies (60).

3. The uniform security applications architecture according to claim 1 or 2 wherein said security domain control services application (10) includes a predefined architecture associated with said shareable interface (80).

4. The uniform security applications architecture according to claim 3 wherein at least one of said plurality of security applications (30, 30A, 30B, 35, 40, 40A, 40B) includes means for manipulating said plurality of security parameters.

5. The uniform security applications architecture according to claim 4 wherein manipulation of said plurality of security parameters facilitates at least the addition, replacement or removal of any of said plurality of security applications (30, 30A, 30B, 35, 40, 40A, 40B) without disruption of said predefined architecture.

6. A uniform security applications architecture for deployment in a security token comprising:
a security domain control services application (10) functionally coupled to a plurality of security applications (30, 30A, 30B, 35, 40, 40A, 40B) through a shareable interface (80), said security domain control services application (10) including at least one registry (205) and a predefined architecture associated with said shareable interface (80);
said at least one registry (205) including a plurality of security parameters associated with each of said plurality of security applications (30, 30A, 30B, 35, 40, 40A, 40B); and
at least one of said plurality of security applications (30, 30A, 30B, 35, 40, 40A, 40B) executable to manipulate said plurality of security parameters, wherein manipulation of said plurality of security parameters facilitates at least the addition, replacement or removal of any of said plurality of security applications (30, 30A, 30B, 35, 40, 40A, 40B) without disruption of said predefined architecture.

7. The uniform security applications architecture according to claim 6 further including one or more logic based rules associated with each of said plurality of security applications (30, 30A, 30B, 35, 40, 40A, 40B).

8. The uniform security applications architecture according to claim 7 wherein the aggregate of said one or more logic based rules and said plurality of security parameters comprises one or more security policies (60).

9. The uniform security applications architecture according to claim 8 wherein said security domain control services application (10) further includes means for enforcing said one or more security policies (60).

10. The uniform security applications architecture according to claim 9 wherein said one or more security policies (60) controls at least one functional aspect of each of said plurality of security applications (30, 30A, 30B, 35, 40, 40A, 40B).

11. The uniform security applications architecture according to claim 1, 2 or 6 further including a plurality of interface modules (15, 15A, 15B, 20, 25, 25A, 25B), wherein said plurality of interface modules (15, 15A, 15B, 20, 25, 25A, 25B) are incorporated into each of said plurality of security applications (30, 30A, 30B, 35, 40, 40A, 40B).

12. The uniform security applications architecture according to claim 11, wherein said plurality of interface modules (15, 15A, 15B, 20, 25, 25A, 25B) are linked to said plurality of security applications (30, 30A, 30B, 35, 40, 40A, 40B) at time of installation.

13. The uniform security applications architecture according to claim 11, wherein said plurality of interface modules (15, 15A, 15B, 20, 25, 25A, 25B) are separate modules functionally coupled to said plurality of security applications (30, 30A, 30B, 35, 40, 40A, 40B).

14. The uniform security applications architecture according to claim 8 wherein said plurality of security applications (30, 30A, 30B, 35, 40, 40A, 40B) includes at least one token services application, at least one token administrative services application and at least one token security services application.

15. The uniform security applications architecture according to claim 14 wherein said at least one of said one or more security applications is incorporated into said security domain control application.

16. The uniform security applications architecture according to claim 14 wherein the functionality of said at least one token services application includes secure storage, public key infrastructure cryptography, application loading or electronic wallet.

17. The uniform security applications architecture according to claim 14 wherein the functionality of said at least one token administrative services application includes configuration or management of said one or more associated security policies (60).

18. The uniform security applications architecture according to claim 17 wherein the functionality of said at least one token administrative services application further includes management of one or more accounting policies, management of token security state or overall token security control.

19. The uniform security applications architecture according to claim 14 wherein the functionality of said at least one token security services application includes authentication, authorization, token unlock or secure messaging.

20. The uniform security applications architecture according to claim 8 wherein said one or more logic based rules includes at least one set of access control rules.

21. The uniform security applications architecture according to claim 8 wherein said one or more logic based rules includes at least one set of lock control rules.

22. The uniform security applications architecture according to claim 8 wherein said one or more logic based rules includes at least one set of unlock control rules.

23. The uniform security applications architecture according to claim 8 wherein said one or more logic based rules includes at least one set of security control methods.

24. The uniform security applications architecture according to claim 8 wherein said one or more logic based rules includes at least one set of authorization methods.

25. The uniform security applications architecture according to claim 18 wherein said one or more accounting policies are included in at least one accounting data file.

26. The uniform security applications architecture according to claim 8 wherein said one or more associated security policies (60) includes at least one access control rule and at least one unique service identifier.

27. The uniform security applications architecture according to claim 26 wherein said one or more associated security policies (60) further includes one or more of the following of said plurality of security parameters:
at least one unique credential identifier, a security state flag associated with said at least one unique credential identifier, at least one cryptographic key unique identifier and a session active flag associated with said at least one cryptographic key unique identifier.

28. The uniform security applications architecture according to claim 27 wherein said plurality of security parameters further includes one or more of the following security parameters:
service type, enablement flag, functional control element, credential descriptor, security state flag, attempted access counter, maximum attempt limit, lock status flag, expired status flag, maximum usage limit, current use counter, lock rule identifier, key descriptor, an active session flag, an instruction step.

29. The uniform security applications architecture according to claim 8 wherein said security domain control application is coded in a native language of said security token.

30. The uniform security applications architecture according to claim 8 wherein said one or more security policies (60) controls an association between at least one of said plurality of security applications (30, 30A, 30B, 35, 40, 40A, 40B) with either cryptographic keys or credentials.

31. The uniform security applications architecture according to claim 8 wherein said security domain control application is coded in a high level language.

32. A method for functionally installing a security application inside a security token comprising the steps of:
a. functionally (302) receiving a security domain control services application (10) downloadable,
b. receiving (304) a security application downloadable,
c. registering (306) said security application downloadable with said security domain control services application (10) downloadable,
d. configuring (308) one or more security policies (60) for said security application downloadable, and
e. setting (310) at one or more security states for said security application downloadable.

33. The method for functionally installing a security application inside a security token according to claim 32 further comprising;
a. repeating steps 32.b. - 32.e. if additional security application downloadables are to be installed.

34. The method according to claim 32 further comprising:
a. registering said security domain control services application downloadable with another security domain control services application (10).

35. A method for initializing a security application functionally installed inside a security token comprising the steps of:
a. performing (322) an authentication in accordance with one or more associated security control methods, and
b. setting (324) an authentication state.

36. The method according to claim 35 further comprising the steps of:
a. determining if a secure messaging session is required by one or more associated security policies (60),
b. establishing (332) a secure messaging session in accordance with said one or more associated security control methods, and
c. setting (334) a secure messaging state required by said one or more associated security policies (60).

37. The method according to claim 35 or 36 further comprising the step of:
a. validating authorization parameters in accordance with one or more associated authorization rules.

38. The method according to claim 37 further comprising the step of:
a. recording transaction accounting data in accordance with one or more associated accounting policies.

39. A method for using a security application functionally installed inside a security token comprising the steps of:
a. executing (342) a security application,
b. verifying (344) that said security application is enabled,
c. verifying (346) that a functional control element of said security application is enabled,
d. retrieving (348) one or more security policies (60) associated with said security application, and
f. validating (350) said one or more security policies (60).

40. A uniform security applications architecture for deployment in a security token comprising:
a security domain control services application (10) including control means for controlling at least one functional aspect of at least one security application,
a set of security policies (60) having a functional relationship to said at least one security application and readable by said security domain control services application (10),
wherein said set of security policies (60) are read by said control means for controlling said at least one functional aspect of said at least one security application.

41. A uniform security applications architecture for deployment in a security token according to claim 40 and further comprising:
a sharable interface (80) functionally linked to said at least one security application,
wherein said set of security policies (60) are read by said control means for controlling said link to said sharable interface (80).

42. A uniform security applications architecture for deployment in a security token comprising:
a security domain control services application (10) including a sharable interface (80) and install means for installing at least one security application, wherein said install means includes means for performing an operation which functionally links said at least one security application to said sharable interface (80).

43. A uniform security applications architecture for deployment in a security token comprising:
a security domain control services application (10) including a sharable interface (80) and uninstall means for uninstalling at least one security application, wherein said uninstall means includes means for performing an operation which functionally unlinks said at least one security application from said sharable interface (80).

44. A uniform security applications architecture for deployment in a security token according to claim 42 and further comprising:
a registry (205),
wherein said install means includes means for performing an operation which registers said at least one security application in said registry (205).

45. A uniform security applications architecture for deployment in a security token according to claim 43 and further comprising:
a registry (205),
wherein said uninstall means includes means for performing an operation which unregisters said at least one security application from said registry (205).

46. The uniform security applications architecture according to claim 42, 43, 44 or 45 wherein said operation is specific to said at least one security application.

47. The uniform security applications architecture according to claim 8 wherein said plurality of security parameters includes an enablement flag alterable by at least one of said plurality of security applications (30, 30A, 30B, 35, 40, 40A, 40B).

48. The uniform security applications architecture according to claim 8 wherein said plurality of security parameters includes at least one functional control element, said functional control element operable for control at least one functional aspect of at least one of said plurality of security applications (30, 30A, 30B, 35, 40, 40A, 40B).

49. The uniform security applications architecture according to claim 8 wherein said one or more security policies (60) further comprises:
at least one of security control method including one or more parameters readable by a token security services application for determining which credential or cryptographic key is to be used in conjunction with at least one access control rule, and
said at least one access control rule including one or more logic based rules associated with said token security services application.

50. The uniform security applications architecture according to claim 8 wherein said one or more security policies (60) further comprise at least one authorization method for evaluating a parameter for an operational limitation.

51. The uniform security applications architecture according to claim 50 wherein said parameter is either internal to said security token or received from an external host.

52. A uniform security applications architecture for deployment in a security token comprising:
a set of security policies (60) readable by a security domain control services application (10), wherein said set of security policies (60) includes prerequisite information associated with a token services application for performing a token service;
said token services application having a functional relationship to said security domain control services application (10), said token services application including means for;
receiving a request for services,
sending a permissive request to perform said token service to said security domain control services application (10),
receiving a determinative response from said security domain control services application (10) determinative for performance of said token service, and
performing a token service in accordance with at least a portion of said set of security policies (60).
said security domain control services application (10) including means for;
receiving said permissive request sent from said token services application,
determining applicable security policies (60) for said permissive request,
enforcing said set of security policies (60), and
returning said determinative response to said token services application.

53. The system according to claim 52 wherein said permissive request includes at least one instruction step.

54. The system according to claim 52 wherein said determinative response includes an address for a token security services application.

55. The system according to claim 54 wherein said token services application further includes means for communicating directly with said token security services application in accordance with said at least a portion of said set of security policies (60).
